Europäisches Patentamt

European Patent Office

Office européen des brevets

(11) Publication number: **0 272 466 B1**

## EUROPEAN PATENT SPECIFICATION

(45) Date of publication of patent specification: **12.08.92** (51) Int. Cl.[5]: **G01K 11/18**, G01M 11/00

(21) Application number: **87117238.3**

(22) Date of filing: **23.11.87**

(54) Distributed temperature sensor using an optical fibre as sensing element.

(30) Priority: **24.11.86 IT 6787186**

(43) Date of publication of application:
**29.06.88 Bulletin 88/26**

(45) Publication of the grant of the patent:
**12.08.92 Bulletin 92/33**

(84) Designated Contracting States:
**DE FR GB NL SE**

(56) References cited:
**EP-A- 0 190 001**
**GB-A- 2 140 554**

**ELECTRONICS LETTERS. vol. 21, no. 13, 20 June 1985, GB pages 569 - 570; J.P.Dakin et al.: "DISTRIBUTED OPTICAL FIBRE RAMAN TEMPERATURE SENSOR USING A SEMICONDUCTOR LIGHT SOURCE AND DETECTOR"**

**ELECTRONICS LETTERS. vol. 22, no. 8, 10 April 1986, GB pages 418 - 419; M.C.Farries et al.: "DISTRIBUTED TEMPERATURE SENSOR USING ND 3+ DOPED OPTICAL FIBRE"**

**OPTICS COMMUNICATIONS. vol. 57, no. 4, 15 May 1986, AMSTERDAM NL pages 269 - 273; R.Ries et al.: "INFLUENCE OF EXTRINSIC FM**

NOISE ON LASER DIODE LINEWIDTH MEASURED BY SELF-HETERODYNING"

(73) Proprietor: **CSELT Centro Studi e Laboratori Telecomunicazioni S.p.A.**
**Via Guglielmo Reiss Romoli, 274**
**I-10148 Turin(IT)**

(72) Inventor: **Grego, Giorgio**
**Via Amati, 130/5**
**Venaria Reale (Torino)(IT)**

(74) Representative: **Riederer Freiherr von Paar zu Schönau, Anton**
**Van der Werth, Lederer & Riederer Freyung**
**615 Postfach 2664**
**W-8300 Landshut(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

Specification

The present invention refers to optical fibre sensors and more particularly concerns a distributed temperature sensor in which the fibre is the sensing element.

Distributed temperature sensors are advantageously employed whenever the temperature is to be determined in different points of a relatively wide ambient, as they eliminate the drawbacks inherent with collecting and transferring information from a great number of individual sensors. Optical fibre sensors in particular have the advantage of resisting to high temperatures and, if the fibre is used also as transmission means, they allow also a remote monitoring and hence can be used to detect temperature in ambients which are not accessible or are accessible only with difficulty and/or risk.

A number of temperature sensors employing an optical fibre as sensing element is known in the art.

For instance, US-A 4,576,485 discloses a sensor in which the fibre is capable of internally generating a thermal radiation in response to the temperature of the monitored ambient and has constant and discrete absorption values for each wavelength of the radiation spectrum; temperature values along the fibre are obtained by measuring the power associated with a plurality of spectral bands into which the fibre output radiation is subdivided.

Such a system has a number of drawbacks: it requires the use of special fibres (fibres for infrared) which are not yet commercially available; it is based on the detection of absorption peaks of an internally generated radiation and hence, in correspondence with certain wavelengths, the fibre output power may be insufficient for detection, so that the temperature data may be imprecise.

Another distributed temperature sensor is disclosed by M.C. Farries, M.E. Fermann, R.I. Laming, S.B. Poole, D.N. Payne and A.P. Leach in the article "Distributed temperature sensor using Nd-(3+) doped optical fibre", Electronics Letters, Vol. 22, No. 8, 10 April 1986. In this known sensor, a radiation is launched into the fibre and the attenuation of the backscattered radiation is measured at the wavelengths corresponding to the absorption peaks due to Nd ions, such attenuation being dependent on the doping ions concentration and on temperature. The measurements on the backscattered radiation are effected by an optical time domain reflectometer (OTDR) which allows the attenuation information to be associated with a position along the fibre. Thanks to the use of a radiation launched from the outside into the fibre, this system obviates the sensitivity problems of the sensor of the above referred US-A, provided the power source is sufficiently high. Yet it still requires the use of a special fibre and the precision of the information obtained depends on the precise knowledge of the dopant concentration. Moreover attenuation measurements are effected, so that the results also depend on the precise knowledge of the source power.

On the contrary the present invention provides a sensor which does not require especially treated fibres and which supplies information independent of the power of the source employed.

Document EP-A-0 190 001 discloses a sensor as described in the preamble of the independent claim. The sensor according to the invention is characterized in that the means for collecting the backscattered radiation comprises means for comparing the frequency spectrum of the backscattered radiation and the frequency spectrum of the radiation sent into the fibre and for measuring the width of a spectral line in the backscattered radiation spectrum for a plurality of backscattering points along the fibre.

The sensor of the invention is based upon the consideration that an electromagnetic radiation launched into an optical fibre undergoes not only an attenuation but also a temperature-dependent variation in its frequency spectrum because of the scattering by the molecules of the material. More particularly, the backscattered radiation spectrum exhibits, superimposed to the line of the incident radiation spectrum, a further line due to Rayleigh scattering, said further line having a width:

$$\delta v_{RW} = \frac{3KT}{8\pi^2 a^3 \eta}$$

where:

K = wave vector of the radiation used for the measurement;
T = absolute temperature
a = radius of the particles
$\eta$ = viscosity of the material

By measuring the linewidth $\delta v_{RW}$, the temperature of the body can be immediately obtained, as the fibre viscosity is substantially constant as long as the temperature of the monitored ambient or body is sufficiently lower than the fibre softening temperature.

The sensor based upon the scattering analysis solves the problems mentioned above: in effect, the scattering occurs in all fibres, and hence conventional fibres, e.g. made of silica glass, can be used without need to resort to fibres made with special materials or with an ad hoc doping. Moreover, the measurement of a spectral linewidth, contrary to the attenuation measurement, gives results independent of the optical power launched into the fibre.

The means detecting the spectrum variations can be an optical means which operates directly on the scattered beam outgoing from the fibre and can comprise e.g. a Fabry - Perot interferometer. Preferably however, for each pulse of electromagnetic radiation the beat is created between a pulse fraction which is sent to a detector along a path outside the fibre and the radiation resulting from the backscattering of the residual pulse fraction, and the frequency variations of the electric pulse representative of such a beat are analyzed. That alternative embodiment has the advantage of a greater sensibility.

In order that the spectrum variations can be associated with the position along the fibre, the means detecting such variations will be embodied into a measuring system based upon the above mentioned optical time domain reflectometry techniques.

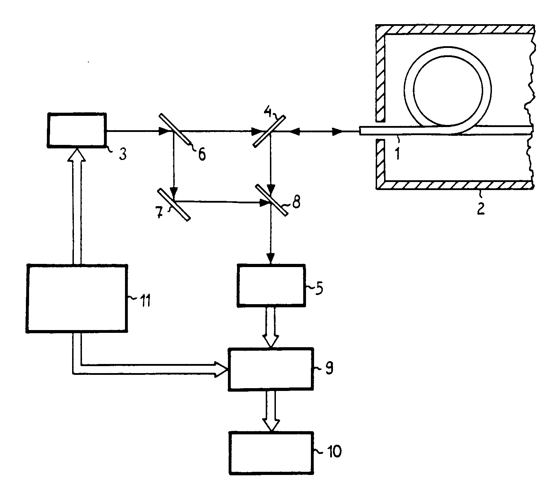

To better illustrate the invention, reference is made to the accompanying drawing which schematically shows a distributed temperature sensor according to the invention.

In the drawing, at least part of the length of a conventional silica-glass optical fibre 1 is located within an ambient 2 of which the temperature is to be monitored or which contains a body whose temperature is to be measured.

A light source 3 is arranged to send towards one end of fibre 1 light pulses with predetermined duration and frequency, through a beam splitter 4 arranged so as to collect also the radiation backscattered in the fibre and to send it to a detector 5.

The latter receives also a fraction of the power associated with each pulse sent to the fibre and creates an electric signal representing the beat between the radiation emitted by source 3 and the one backscattered by the fibre. That power fraction is taken for instance by means of a second beam splitter 6 and is made to arrive onto the detector by means of mirrors 7, 8. The beat occurs because the frequency of the backscattered radiation differs from that of the incident radiation at least due to the presence of the Rayleigh scattering line. Since the width of the Rayleigh line varies with temperature, also the frequency of the detector output signal (equal to the difference of the frequencies of the two input signals) will vary with temperature.

The output signal of detector 5 is sent to a device 9 capable of meausuring the value of the frequency thereof and to supply such a value as a function of the instant of arrival of the signal itself and hence of the position of the scattering point along the fibre. To this end, device 9 may for instance comprise a spectrum analyzer connected, together with source 3, in the electronic circuitry of an OTDR system, schematized by block 11. The details of that circuitry are not shown, as its structure is well known to the skilled in the art. A computing system 10 will obtain from each frequency value the value of the temperature in the corresponding point.

Besides the advantages already described, a sensor according to the invention offers a high sensitivity. In effect the scattering line is some ten MHzs wide, and commercially available spectrum analyzers, even not particularly sophisticated and hence of relatively low cost, can measure such a value with a precision of some KHzs. Therefore, in the range of the temperatures measurable by means of a silica-glass optical fibre (up to about 1500° K), the sensor can detect temperature differences from the hundredths to the tenths of degree, depending on the value of T.

As an alternative to the beat frequency measurement, when the above sensitivity is not required, the width of the Rayleigh line can be measured directly on the fibre output radiation, for instance by a Fabry-Perot interferometer also connected in an OTDR system to allow the frequency information to be associated with the position in the fibre.

## Claims

1. Distributed temperature sensor comprising: an optical fibre (1), which is located for at least a part of its length in an ambiance (2) or near a body whose temperature is to be measured, and which has a softening point higher than the maximum temperature attainable by the ambiance (2) or body being monitored; means (3) for sending electromagnetic radiation into said fibre (1); means (4, 5, 9) for collecting the radiation backscattered in the fibre (1), and computing means (10) for obtaining the temperature values from signals generated by the collecting means (4, 5, 9), characterized in that the means (4, 5, 9) for collecting the backscattered radiation comprises means (9) for comparing the frequency spectrum of the backscattered radiation and the frequency spectrum of the radiation sent into the fibre and for measuring the width of a spectral line in the backscattered radiation spectrum and determining the temperature from said width for a plurality of backscattering points along the fibre.

**2.** Sensor according to claim 1, characterized in that the means (9) measuring the line width are arranged to measure the width of the line due to Rayleigh scattering, and the computing means (10) to obtain the temperature values from the width of said line due to the Rayleigh scattering.

**3.** Sensor according to claim 2, characterized in that the means (9) for measuring the line width are connected together with the source in an optical time domain reflectometer.

**4.** Sensor according to claim 2 or 3, characterized in that the means (9) for measuring the line width is an optical means arranged to directly analyze the radiation outgoing from the fibre.

**5.** Sensor according to any of claims 1 to 4, characterized in that a beam splitter (6) is arranged between the source (3) and the fibre (1) to take a fraction of each electromagnetic radiation pulse sent into the fibre (1); in that the means (4, 5, 9) collecting the backscattered radiation comprises a detector (5) receiving said pulse fraction, which follows a path outside the fibre (1), and the radiation resulting from the backscattering of the residual pulse fraction, and generating an electric signal, having a frequency equal to the difference between the frequencies of the radiations present at its input and representing the beat between said radiations, and in that the means (9) for measuring the line width is arranged to determine the frequency variation of said electric signal.

## Revendications

**1.** Détecteur distribué de température comprenant: une fibre optique (1), qui est placée pour une partie au moins de sa longueur à l'intérieur d'un milieu (2) ou près d'un corps dont on doit mesurer la température, et qui a un point de ramollissement plus haut que la température maximale qui peut être atteinte par le milieu (2) ou corps surveillé; des moyens (3) pour envoyer un rayonnement électromagnétique dans la fibre (1); des moyens (4, 5, 9) pour recueillir le rayonnement rétrodiffusé dans la fibre (1); et des moyens de calcul (10) pour obtenir les valeurs de la température à partir de signaux engendrés par les moyens de récolte (4, 5, 9); caractérisé en ce que les moyens (4, 5, 9) pour recueillir le rayonnement rétrodiffusé comprennent des moyens pour comparer le spectre de fréquence du rayonnement rétrodiffusé et le spectre de fréquence du rayonnement envoyé dans la fibre et pour mesurer la largeur d'une ligne spectrale dans le spectre du rayonnement rétrodiffusé et déterminer la température à partir de cette largeur pour une pluralité de points de rétrodiffusion le long de la fibre.

**2.** Détecteur selon la revendication 1, caractérisé en ce que les moyens (9) pour mesurer la largeur de ligne sont agencés de façon à mesurer la largeur de la ligne due à la diffusion de Rayleigh, et les moyens de calcul (10) de façon à obtenir les valeurs de température à partir de la largeur de cette ligne due à la diffusion de Rayleigh.

**3.** Détecteur selon la revendication 2, caractérisé en ce que les moyens (9) pour mesurer la largeur de ligne sont connectés, avec la source, dans un réflectomètre optique dans le domaine du temps.

**4.** Détecteur selon la revendication 2 ou 3, caractérisé en ce que les moyens (9) pour mesurer la largeur de ligne sont constitués par un dispositif optique agencé de façon à analyser directement le rayonnement sortant de la fibre.

**5.** Détecteur selon l'une quelconque des revendications 1 à 4, caractérisé en ce qu'un séparateur de faisceau (6) est arrangé entre la source (3) et la fibre (1) pour prélever une fraction de chaque impulsion de rayonnement électromagnetique envoyée dans la fibre (1); en ce que les moyens (4, 5, 9) pour recueillir le rayonnement rétrodiffusé comprennent un détecteur (5) qui reçoit cette fraction, qui suit un parcours à l'extérieur de la fibre, et le rayonnement resultant de la rétrodiffusion de la fraction d'impulsion résiduelle, et qui engendre un signal électrique, dont la fréquence est égale à la différence des fréquences des rayonnements présents à son entrée et qui représente le battement entre ces rayonnements, et en ce que les moyens (9) pour mesurer la largeur de ligne sont agencés de façon à déterminer les variations de fréquence de ce signal électrique.

## Patentansprüche

**1.** Verteilter Temperatursensor mit folgenden Teilen: einer Lichtleitfaser (1), die zumindest für einen Teil ihrer Länge in einer Umgebung (2) oder nahe einem Körper, deren bzw. dessen Temperatur zu messen ist, angeordnet ist und die einen Erweichungspunkt hat, der höher liegt als die maximale von der zu beobachtenden Umgebung (2) oder dem Körper annehmbare Temperatur; einer Einrichtung (3) zum Senden elektromagnetischer Strahlung in die Faser (1); einer Einrichtung (4, 5, 9) zum Aufnehmen der in der Faser (1) zurückgestreuten Strahlung; und eine Recheneinrichtung (10) zum Erhalten der Temperaturwerte aus den von der aufnehmenden Einrichtung (4, 5, 9) erzeugten Signalen; dadurch gekennzeichnet, daß die Einrichtung (4, 5, 9) zum Aufnehmen der zurückgestreuten Strahlung eine Einrichtung (9) zum Vergleichen des Frequenzspektrums der zurückgestreuten Strahlung und des Frequenzspektrums der in die Faser eingeleiteten Strahlung und zum Messen der Breite einer Spektrallinie im Spektrum der zurückgestreuten Strahlung und Bestimmen der Temperatur aus dieser Breite für eine Mehrzahl zurückstreuender Punkte entlang der Faser umfaßt.

2. Sensor nach Anspruch 1, dadurch gekennzeichnet, daß die die Breite der Linie messende Einrichtung (9) die Breite der Linie aufgrund der Rayleigh'schen Streuung mißt und die Recheneinrichtung (10) die Temperaturwerte aus der Breite der Linie aufgrund der Rayleigh'schen Streuung ermittelt.

3. Sensor nach Anspruch 2, dadurch gekennzeichnet, daß die die Breite der Linie messende Einrichtung (9) mit der Quelle (3) in einem optischen Zeitbereich-Reflektometer zusammengeschlossen ist.

4. Sensor nach Anspruch 2 oder 3, dadurch gekennzeichnet, daß die die Breite der Linie messende Einrichtung (9) eine optische Einrichtung ist, die die von der Faser ausgehende Strahlung unmittelbar analysiert.

5. Sensor nach einem der Ansprüche 1 bis 4, dadurch gekennzeichnet, daß zwischen der Quelle (3) und der Faser (1) ein Strahlspalter (6) angeordnet ist, der einen Bruchteil jedes elektromagnetischen Strahlungsimpulses, der in die Faser (1) gesendet wird, annimmt; daß die Einrichtung (4, 5, 9) zum Aufnehmen der zurückgestreuten Strahlung einen Detektor (5) umfaßt, der jenen Impulsbruchteil, der einen Weg außerhalb der Faser (1) nimmt, und die aus der Rückstreuung des restlichen Impulsbruchteils resultierende Strahlung aufnimmt und ein elektrisches Signal erzeugt, dessen Frequenz gleich der Differenz zwischen den Frequenzen der an seinem Eingang liegenden Strahlungen ist und das die Schwebung zwischen diesen Strahlungen darstellt, und daß die die Breite der Linie messende Einrichtung (9) zur Bestimmung der Frequenzänderung dieses elektrischen Signals ausgebildet ist.